# EUROPEAN PATENT SPECIFICATION

(11) **EP 0 313 598 B1**
(45) Date of publication and mention of the grant of the patent: **02.06.1993**
(21) Application number: 88903678.6
(22) Date of filing: 31.03.1988
(51) Int. Cl.: B41J 2/19

(54) **DEAERATION OF INK IN AN INK JET SYSTEM**
ENTLÜFTUNG VON TINTE IM TINTENSTRAHLSYSTEM
DESAERATION DE L'ENCRE DANS UN SYSTEME A JET D'ENCRE

(30) Priority: 28.04.1987 US 43372
(43) Date of publication of application: 03.05.1989
(73) Proprietor: SPECTRA, INC., Hanover, NH 03755 (US)
(72) Inventor: HOISINGTON, Paul, A., Thetford Center, VT 05075 (US); HINE, Nathan, P., East Thetford, VT 05043 (US); SPEHRLEY, Charles, W., Jr., White River Junction, VT 05001 (US)
(74) Representative: Jackson, Peter Arthur
(86) International application number: PCT/US88/01045
(87) International publication number: WO 88/08515

(56) References cited:
- JP-A-58 219 067
- US-A- 4 301 459
- US-A- 4 340 895
- US-A- 4 460 904
- US-A- 4 502 055
- US-A- 4 571 599
- US-A- 4 729 773

## Description

This invention relates to methods and apparatus for the elimination of dissolved air from ink used in an ink jet apparatus and, more particularly, to a new and improved method and apparatus for deaerating ink in a highly effective manner.

In many ink jet systems, ink is supplied to a chamber or passage connected to an orifice from which the ink is ejected drop-by-drop as a result of successive cycles of decreased and increased pressure applied to the ink in the passage, usually by a piezo-electric crystal having a pressure-generating surface communicating with the passage. If the ink introduced into the passage contains dissolved air, decompression of the ink during the reduced pressure portions of the pressure cycle may cause the dissolved air to form small bubbles in the ink within the passage. Repeated decompression of the ink in the chamber causes these bubbles to grow and such bubbles can produce malfunctions of the ink jet apparatus.

Heretofore, it has been proposed to supply deaerated ink to an ink jet apparatus and maintain the ink in a deaerated condition by keeping the entire supply system hermetically sealed using, for example, flexible plastic bags or pouches as a deaerated ink supply. Such arrangements are not entirely satisfactory, however, because the flexible plastic pouches are at least partially air-permeable and, in hot melt ink systems, this problem is aggravated because the plastic pouch material becomes more permeable to air at elevated temperatures at which the heated ink is capable of dissolving large amounts of air, e.g., up to 20 per cent by volume. Moreover, air may dissolve into the ink at the ink jet orifice during periods of non-jetting. Such dissolved air may diffuse through the ink into the jet pressure chamber, and thereby cause malfunction of the jet. Consequently, air bubble formation in the ink jet head of a hot melt jet apparatus is a primary cause of hot melt ink jet failure.

In accordance with the invention an ink jet system comprising an ink jet head, and a deaerator for removing dissolved gas from ink being supplied to the head and comprising pressure control means for providing a reduced gas pressure to the deaerator (as disclosed for example in US-A-4340895) is characterised by the deaerator further comprising gas-permeable/ink-impermeable barrier means forming a wall of a narrow elongate ink-containing passage which provides an ink flow path from a reservoir of hot melt ink to the head; and plenum means forming a plenum on the side of the barrier means opposite from the ink-containing passage; wherein the reduced gas pressure is applied to the plenum and is sufficient to cause gas dissolved in ink in the ink-containing passage to be extracted from the ink through the barrier means as the ink flows to the head along the narrow ink-containing passage.

The invention also includes a method of operating an ink jet system, wherein hot melt ink is supplied from a reservoir along a narrow elongate passage to an ink jet head, the passage having a wall provided by a gas-permeable/ink-impermeable barrier, and reduced gas pressure is applied to the side of the barrier remote from the passage so that air dissolved in the ink is extracted from the ink through the barrier.

In a particular embodiment, the ink supply leading to the ink jet head includes a deaerating passage in which the ink is formed into an elongate thin layer between two opposite wall portions and at least one of the wall portions comprises a flexible, air-permeable membrane covering a plenum in which the air pressure may be reduced or increased. In addition, a check valve is provided upstream from the deaerating passage so that increased pressure in the plenum will eject ink and any trapped air bubbles from the ink jet head. Within the ink jet head, ink is circulated by convection from the orifice to the deaerating passage.
Fig. 1 is a block diagram, partly in section, schematically illustrating a representative embodiment of an ink jet ink supply system including an ink deaerator in accordance with the present invention; and
Fig. 2 is an enlarged cross-sectional view of the ink deaerator used in the ink supply system of Fig. 1.

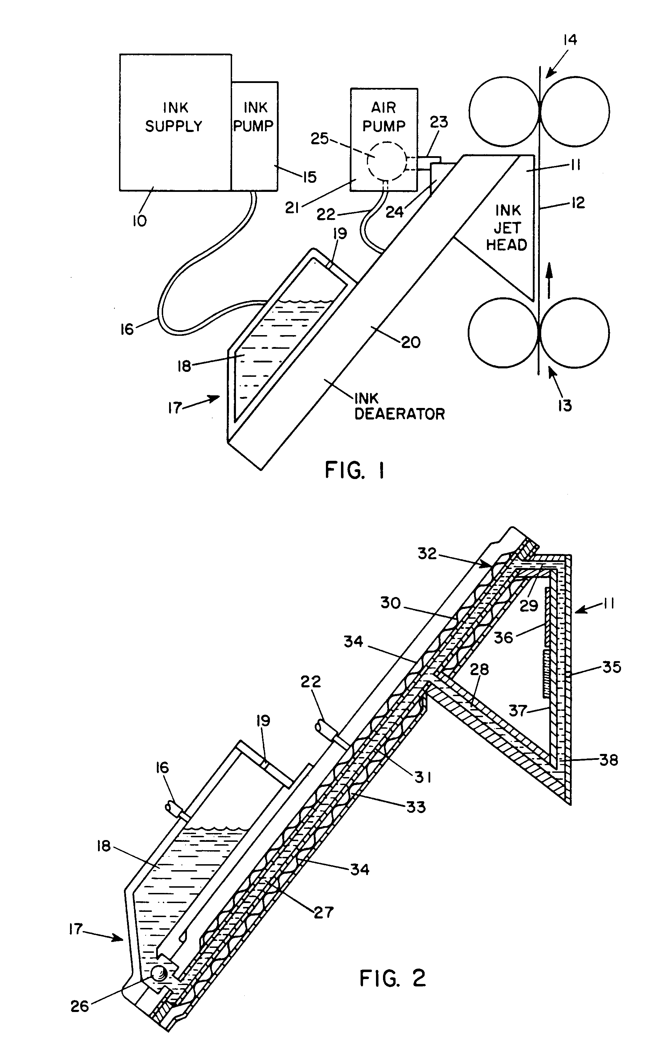

In the typical embodiment of the invention illustrated in the drawings, an ink jet apparatus includes an ink supply reservoir 10 holding liquid ink for use in an ink jet head 11 from which ink is ejected to produce a desired pattern on a sheet or web 12 of paper or other image support material in the usual manner. The ink jet head 11 is supported by conventional means for reciprocal motion transverse to the web 12, i.e., perpendicular to the plane of Fig. 1, and the web is transported by two sets of drive rolls 13 and 14 in the direction indicated by the arrow past the ink jet head.

The ink supply system includes an ink pump 15 for transferring ink from the ink supply 10 through a flexible supply line 16 to a reservoir 17 which is supported for motion with the ink jet head 11. The ink supply system may be of the type described in WO 88 08514 (published 03/11/88). In that ink supply system ink is transferred from the ink supply 10 to the reservoir 17 only when the level of the ink 18 in the reservoir is low.

To maintain the ink in the reservoir 17 at atmospheric pressure, a vent 19 is provided. Accordingly, the ink 18 standing in the reservoir 17 contains air even if the ink was protected from air in the ink supply 10. Moreover, when hot melt inks are used, as much as 20 percent by volume of air may be dissolved in the ink. If ink containing such dissolved air is subjected to the periodic decompression which takes place in the ink jet head 11, air bubbles can form in the ink, causing failures in the operation of the ink jet head.

To overcome this problem an ink deaerator 20 is provided in the ink supply path between the reservoir 17 and the ink jet head 11. An air pump 21 is connected through a flexible air line 22 to provide increased or reduced air pressure to the ink deaerator. The ink deaerator 20 is mounted for reciprocal motion with the ink jet head 11 and the reservoir 17, and, in the illustrated embodiment, the air pump 21 is operated by engagement of a projectable pump lever 23 with a projecting lug 24 on the deaerator 20 during the reciprocal motion of the deaerator.

The pump lever 23 is connected to a piston 25 within the pump arranged so that, if negative pressure is to be provided to the deaerator, the pump lever will be engaged during motion of the deaerator in one direction, causing the piston to move in a direction to apply reduced pressure through the line 22, after which the piston may be locked in position. If increased pressure is to be applied to the deaerator, the lever 23, together with the piston 25, is moved in the opposite direction by the lug 24.

The internal structure of the deaerator 20 and the ink jet head 11 is shown in the sectional view of Fig. 2. At the lower end of the reservoir 17 a check valve 26 is arranged to permit ink to pass from the reservoir to a narrow elongated deaerating passage 27 which leads to two passages 28 and 29 in the ink jet head 11 through which ink is supplied to the head. In a particular embodiment, the passage 27 is about 0.10 cm. thick, 1.5 cm. wide and 8.89 cm. long and is bounded by parallel walls 30 and 31 which are made from a flexible sheet material which is permeable to air but not to ink. The material may, for example, be a 0.025 cm. thick layer of medical grade silicone sheeting such as Dow Corning SSF MEXD-174.

On the other side of the membranes 30 and 31 from the passage 27, air plenums 32 and 33, connected to the air line 22, are provided. Each plenum contains a membrane support 34 consisting, in the illustrated example, of a corrugated porous sheet or screen, to support the membrane when the pressure within the plenum is reduced. The air pump 21 is arranged to normally maintain pressure within each plenum at less than about 0.75 atmosphere and, preferably at about 0.4 to 0.6 atmosphere. In addition, the length and width of the passage 27 are selected so that, during operation of the ink jet head, the ink being supplied thereto is subjected to a reduced pressure within the passage for at least about one half minute and, preferably for at least one minute. With this arrangement, enough dissolved air is extracted through the membranes 30 and 31 from the ink within the passage to reduce the dissolved air content of the ink below the level at which bubbles can be formed in the ink jet head.

The membranes 30 and 31 and the plenums 32 and 33 are also arranged to expel ink which may contain air bubbles through the orifice 35 in the ink jet head 11 when operation of the system is started after a shut-down. For this purpose the air pump 21 is arranged as described above to supply increased pressure through the line 22 to the deaerator 20. This causes the flexible membranes 30 and 31 to move toward each other. Since the check valve 26 prevents ink from moving back into the reservoir 17, the ink in the passage 27 is forced into the ink jet head 11, expelling any ink therein which may contain air bubbles through the ink jet orifice 35.

In order to deaerate ink in the ink jet head 11 which may have dissolved air received through the orifice 35, a heater 36 is mounted on the rear wall 37 of an ink jet passage 38 which leads from the passages 28 and 29 to the orifice 35. When the heater 36 is energized, ink in the passage 38 which may contain dissolved air received through the orifice 35 during inactive periods in the operation of the jet is circulated continuously by convection upwardly through the passage 38 and then through the passage 29 to the deaerating passage 27. In the deaerating passage 27 the ink is deaerated as it moves downwardly to the passage 28, and it then returns through the passage 28 to the passage 38.

In operation, ink from the reservoir 17, which contains dissolved air, is transferred to the ink jet head 11 through the passage 27 as the ink jet head operates. The reduced pressure in the plenums 32 and 33 causes dissolved air in the ink to be extracted from the ink through the membranes 30 and 31. As the deaerator 20 moves in its reciprocal motion, the air pump 21 is operated by the lug 24 and lever 23 to maintain reduced pressure in the plenums. When it is necessary to expel ink from the ink jet head on start-up of the system, the air pump 21 is arranged to supply increased pressure to the plenums 32 and 33. During nonjetting periods of the ink jet head, the ink circulates convectively through the passages 38, 29, 27 and 28, transporting ink which may contain air from the orifice 35 to the deaerator.

Although the invention has been described herein with reference to a specific embodiment, many modifications and variations therein will readily occur to those skilled in the art. For example, the permeable membrane and air plenum may form one wall of an ink reservoir.

## Claims

1. An ink jet system comprising an ink jet head (11), and a deaerator for removing dissolved gas from ink being supplied to the head and comprising pressure control means (21) for providing a reduced gas pressure to the deaerator; characterised by the deaerator further comprising gas-permeable/ink-impermeable barrier means (30,31) forming a wall of a narrow elongate ink-containing passage (27) which provides an ink flow path from a reservoir (17) of hot melt ink to the head (11); and plenum means (32,33) forming a plenum on the side of the barrier means opposite from the ink-containing passage; wherein the reduced gas pressure is applied to the plenum (32,33) and is sufficient to cause gas dissolved in ink in the ink-containing passage (27) to be extracted from the ink through the barrier means (30,31) as the ink flows to the head (11) along the narrow ink-containing passage (27).

2. A system according to claim 1, including check valve means (26) at an inlet end to the ink flow path (27), and ink passage means (28,29) connecting the other end of the ink flow path to the ink jet head, wherein the pressure control means (21) includes means for applying increased pressure to the plenum means to force ink in the portion of the ink flow path toward the ink jet head.

3. A system according to any one of the preceding claims, wherein the ink jet head includes an orifice (35) and a closed loop path (28,29,38) between the orifice and the ink-containing element (27) and including heater means (36) for causing convective circulation of ink in the closed loop path between the orifice and the ink-containing element.

4. A system according to any one of the preceding claims, wherein the barrier means is a membrane (31,32).

5. A system according to claim 4, wherein the membrane (31,32) is flexible and a membrane support (34) is provided within the plenum means for holding the membrane means in position when reduced pressure is applied to the plenum means.

6. A system according to claim 4 or claim 5, wherein the membrane thickness is substantially 0.025 cms.

7. A system according to any one of claims 4 to 6, wherein the membrane comprises silicone sheet material.

8. A method of operating an ink jet system, wherein hot melt ink is supplied from a reservoir (17) along a narrow elongate passage (27) to an ink jet head (11), the passage having a wall provided by a gas-permeable/ink-impermeable barrier (30,31), and reduced gas pressure is applied to the side of the barrier remote from the passage so that air dissolved in the ink is extracted from the ink through the barrier.

9. A method according to claim 8, wherein the reduced gas pressure is less than three quarters of the gas pressure on the other side of the barrier.

10. A method according to claim 8 or claim 9, wherein the ink is maintained in contact with the barrier for more than one half minute.

## Patentansprüche

1. Tintenstrahlsystem, das einen Tintenstrahlkopf (11) und einen Entlüfter zur Entfernung von gelöstem Gas aus der Tinte, die dem Kopf zugeführt wird, umfaßt, und das eine Drucksteuerungseinrichtung (21) umfaßt, die dem Entlüfter verminderten Gasdruck zuführt; dadurch gekennzeichnet, daß der Entlüfter weiterhin gasdurchlässige/tinten-undurchlässige Sperreinrichtungen (30, 31) umfaßt, die die Wandung eines schmalen, länglichen, Tinte enthaltenden Kanals (27) bilden, der einen Tintenflußweg von einem Tank (17) mit Heiß-Schmelztinte zum Kopf (11) schafft; und Luftkammereinrichtungen (32, 33), die auf der dem Tinte enthaltenden Kanal gegenüberliegenden Seite eine Luftkammer bilden; wobei der verminderte Gasdruck auf die Luftkammer (32, 33) wirkt und ausreicht, um in der Tinte im Tinte enthaltenden Kanal (27) gelöstes Gas der Tinte durch die Sperreinrichtung (30, 31) hindurch zu entziehen, wenn die Tinte durch den schmalen, Tinte enthaltenden Kanal (27) zum Kopf (11) fließt.

2. System nach Anspruch 1, das ein Rückschlagventil (26) an einem Einlaßende des Tintenflußweges (27) hat, sowie Tintenkanaleinrichtungen (28, 29), die das andere Ende des Tintenflußweges mit dem Tintenstrahlkopf verbinden, wobei die Drucksteuerungseinrichtung (21) eine Einrichtung zum Anlegen erhöhten Drucks an die Luftkammereinrichtung enthält, so daß Tinte in den Bereich des Tintenflußweges auf den Tintenstrahlkopf zu gedrückt wird.

3. System nach einem der vorangehenden Ansprüche, wobei der Tintenstrahlkopf eine Düse (35) hat, sowie einen geschlossenen Kreislauf (28, 29, 38) zwischen der Düse und dem Tinte enthaltenden Element (27), der eine Heizeinrichtung (36) enthält, die konvektive Zirkulation der Tinte im geschlossenen Kreislauf zwischen der Düse und dem Tinte enthaltenden Element bewirkt.

4. System nach einem der vorangehenden Ansprüche, wobei die Sperreinrichtung eine Membran (31, 32) ist.

5. System nach Anspruch 4, wobei die Membran (31, 32) flexibel ist und eine Membranstütze (34) in der Luftkammereinrichtung vorhanden ist, die die Membraneinrichtung in ihrer Stellung hält, wenn verringerter Druck auf die Luftkammereinrichtung wirkt.

6. System nach Anspruch 4 oder Anspruch 5, wobei die Membrandicke im wesentlichen 0,025 cm beträgt.

7. System nach einem der Ansprüche 4 bis 6, wobei die Membran aus Silikonfolienmaterial besteht.

8. Verfahren zum Betreiben eines Tintenstrahlsystems, bei dem Heiß-Schmelztinte von einem Tank (17) durch einen schmalen, länglichen Kanal (27) einem Tintenstrahlkopf (11) zugeführt wird, wobei der Kanal eine Wandung hat, die von einer gasdurchlässigen/tinten-undurchlässigen Sperre (30, 31) gebildet wird, und verringerter Gasdruck an der Seite der Sperre wirkt, die von dem Kanal entfernt ist, so daß in der Tinte gelöste Luft der Tinte durch die Sperre hindurch entzogen wird.

9. Verfahren nach Anspruch 8, wobei der verringerte Gasdruck weniger als drei Viertel des Gasdrucks auf der anderen Seite der Sperre beträgt.

10. Verfahren nach Anspruch 8 oder Anspruch 9, wobei die Tinte über eine halbe Minute lang mit der Sperre in Kontakt gehalten wird.

## Revendications

1. Ensemble de projection d'encre, comprenant une tête (11) de projection d'encre et un organe de désaération destiné à retirer un gaz dissous de l'encre transmise à la tête et comprenant un dispositif de réglage de pression (21) destiné à créer une pression réduite de gaz appliquée à l'organe de désaération, caractérisé en ce que l'organe de désaération comporte en outre un dispositif (30, 31) à barrière perméable au gaz et imperméable à l'encre, formant une paroi d'un étroit passage allongé (27) qui contient de l'encre et qui forme un trajet de circulation d'encre d'un réservoir (17) d'une encre thermofusible à la tête (11), et un dispositif à chambre (32, 33) formant une chambre du côté du dispositif barrière opposé au passage contenant de l'encre, et en ce que la pression réduite est appliquée à la chambre (32, 33) et est suffisante pour que le gaz dissous dans l'encre présente dans le passage (27) soit extrait à travers le dispositif barrière (30, 31) lorsque l'encre circule vers la tête (11) le long de l'étroit passage (27) qui contient de l'encre.

2. Ensemble selon la revendication 1, comprenant un clapet de retenue (26) placé à l'extrémité d'entrée du trajet (27) de circulation d'encre, et un passage (28, 29) raccordant l'autre extrémité du trajet de circulation d'encre à la tête de projection d'encre, le dispositif (21) de réglage de pression comprenant un dispositif destiné à appliquer une surpression à la chambre de manière que l'encre soit chassée dans la partie du trajet de circulation d'encre vers la tête de projection d'encre.

3. Ensemble selon l'une quelconque des revendications précédentes, dans lequel la tête de projection d'encre comporte un orifice (35) et un trajet (28, 29, 38) en boucle fermée formé entre l'orifice et l'élément contenant l'encre (27), et comprenant un dispositif de chauffage (36) destiné à provoquer la circulation de l'encre par convection dans le trajet en boucle fermée entre l'orifice et l'élément qui contient l'encre.

4. Ensemble selon l'une quelconque des revendications précédentes, dans lequel le dispositif barrière est une membrane (31, 32).

5. Ensemble selon la revendication 4, dans lequel la membrane (31, 32) est souple, et un support (34) de membrane est placé dans la chambre afin qu'il maintienne la membrane en position lorsqu'une dépression est appliquée dans la chambre.

6. Ensemble selon la revendication 4 ou 5, dans lequel l'épaisseur de la membrane est pratiquement égale à 0,025 cm.

7. Ensemble selon l'une quelconque des revendications 4 à 6, dans lequel la membrane est une feuille de silicone.

8. Procédé de commande d'un ensemble à jets d'encre, dans lequel une encre thermofusible est transmise d'un réservoir (17) par un étroit passage allongé (27) à une tête (11) de projection d'encre, le passage ayant une paroi qui comporte une barrière (30, 31) qui est perméable au gaz et imperméable à l'encre, dans lequel une pression réduite de gaz est appliquée au côté de la barrière opposé au passage afin que l'air dissous dans l'encre soit extrait de l'encre et traverse la barrière.

9. Procédé selon la revendication 8, dans lequel la pression réduite de gaz est inférieure aux trois-quarts de la pression de l'autre côté de la barrière.

10. Procédé selon la revendication 8 ou 9, dans lequel l'encre est maintenue au contact de la barrière pendant plus d'une demie minute.
